# EUROPEAN PATENT APPLICATION

(11) **EP 1 689 063 A1**
(43) Date of publication of application: **09.08.2006**
(21) Application number: 04772113.9
(22) Date of filing: 18.08.2004
(51) Int. Cl.: H02J 7/34

(54) **POWER SUPPLY SYSTEM**

(30) Priority: 27.11.2003 JP 2003397489
(71) Applicant: NTT Facilities Inc., Tokyo 108-0023 (JP)
(72) Inventor: TAKAGI, Shinya, c/o NTT Facilities, Inc., Minato-ku, Tokyo 108-0023 (JP); MATSUSHIMA, Toshio, c/o NTT Facilities, Inc., Minato-ku, Tokyo 108-0023 (JP); MUROOKA, Kiyoshi Shindengen Electric Manufacturing, Hanno-shi, Saitama 357-0036 (JP); NEMOTO, Ken-ichi Shindengen Electric Manufacturing, Hanno-shi, Saitama 357-0036 (JP)
(74) Representative: Garratt, Peter Douglas
(86) International application number: PCT/JP2004/012152
(87) International publication number: WO 2005/053132

(57) **Abstract**

A power supply system comprising: a DC power supply apparatus; a load device; a lithium ion battery for backup that is connected in parallel with said DC power supply apparatus and said load device; a charging current limiting circuit that is connected in series with said lithium ion battery and supplies a charging current of an arbitrary value independent of load fluctuations in the charging path of the lithium ion battery; a switch that disconnects said lithium ion battery from said DC power supply apparatus or said load device, or connects said lithium ion battery to said DC power supply apparatus or said load device; and a control circuit that monitors the voltage value of said charging path, sets a reference voltage setting used for setting the charging current of an arbitrary value in said charging current limiting circuit, and controls said switch when said voltage of said charging path exceeds a specified voltage value during charging.

## Description

### TECHNICAL FIELD

The present invention relates to a power supply system having a constitution in which a lithium ion battery for backup is connected in parallel to a DC power supply apparatus and a load device.

Priority is claimed on Japanese Patent Application No. 2003-397489, filed November 27, 2003, the content of which is incorporated herein by reference.

### BACKGROUND ART

A valve-regulated lead-acid battery is mainly used for backup in a power supply system that supplies electrical power to a load device such as a communication device. Valve-regulated lead-acid batteries have come to be widely used in communication devices because of their low cost and the benefits they bring in terms of system configuration. Such benefits include performing maintenance charging required for capacity preservation and recovery charging after a power outage by maintaining a constant voltage.

In recent years, there has been an increasing demand for downsizing of power supply systems and shortening of the backup time. Valve-regulated lead-acid batteries have conventionally been employed in order to meet such demands. However, when using valve-regulated lead-acid batteries, there have been limits to downsizing due to restrictions imposed on the current value during high-current discharge. This has as a result led to restrictions on downsizing the power supply system as well.

In order to downsize a valve-regulated lead-acid battery, it is effective to apply a secondary battery that is characterized by realizing a high energy density and being capable of withstanding a high-current discharge. A lithium ion battery provides the aforementioned characteristics and has the characteristic of being suited to constant-voltage charging in the manner of a valve-regulated lead-acid battery. Therefore, use of a lithium ion battery can realize a power supply system that allows downsizing and enlargement of capacity.

In the case of a lithium ion battery being used, the battery is connected to a charging device during charging and when fully charged is disconnected from the charging device or has its connection switched to a load device to supply power thereto (refer, for example, to Japanese Unexamined Patent Application No. H04-331425).

Uninterruptibility is being sought in systems that supply power to communication devices and the like. The charging method disclosed in Japanese Unexamined Patent Application No. H04-331425 requires switching or disconnection of the connection of a lithium ion battery from a DC power supply apparatus serving as a charging apparatus and a load device. Therefore, a power supply system that supplies uninterrupted power could not be achieved.

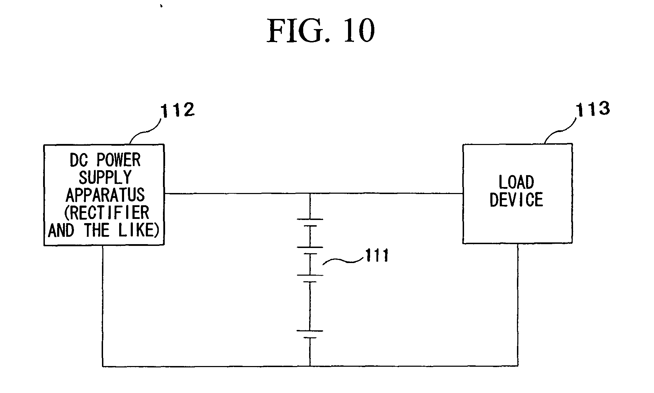

In contrast, it is conceivable to simply arrange a lithium ion battery 111 in the power supply system shown in FIG 10. After a power outage, in the case of power having been supplied from a DC power supply apparatus 112 such as a rectifier to a load device 113, current exceeding the allowable current value of the battery flows into the lithium ion battery 111, which has led to damage to the battery. In addition, it is necessary to monitor the cell voltage of the lithium ion battery 111 from the safety standpoint of the battery, and protection of the battery is required against a reduction in capacity in the case of the upper limit value being exceeded. However, a power supply system adopting such measures has not been conventionally achieved.

### DISCLOSURE OF THE INVENTION

In view of the aforementioned circumstances, the present invention has as its object to provide a power supply system that can protect a battery from overcharging or prevent a drop in capacity of a lithium ion battery and realizes a constant connection to eliminate the need for connection switching or disconnecting of the lithium ion battery. It is another object of the present invention to provide a power supply system that prevents variations in the cell voltage of each lithium ion battery during charging.

In order to solve the aforementioned problems, the present invention provides a power supply system comprising: a DC power supply apparatus; a load device; a lithium ion battery for backup that is connected in parallel with said DC power supply apparatus and said load device; a charging path; a charging current limiting circuit that is connected in series with said lithium ion battery and supplies a charging current of an arbitrary value independent of load fluctuations in the charging path of the lithium ion battery; a switch that disconnects said lithium ion battery from said DC power supply apparatus or said load device, or connects said lithium ion battery to said DC power supply apparatus or said load device; and a control circuit that monitors the voltage value of said charging path, sets a reference voltage setting used for setting the charging current of an arbitrary value in said charging current limiting circuit, and controls said switch when said voltage of said charging path exceeds a specified voltage value during charging. The power supply system performs disconnection from said DC power supply apparatus or said load device or performs connection to said DC power supply apparatus or said load device.

Also, in the aforementioned power supply system, a plurality of said lithium ion batteries are connected in series, and said power supply system is further provided with a voltage regulation circuit that is connected in parallel with each lithium ion battery of said plurality of series-connected lithium ion batteries, detects a full-charge voltage in each of the lithium ion batteries and bypasses the charging current.

In order to solve the aforementioned problems, the present invention provides a power supply system comprising: a DC power supply apparatus; a load device; a plurality of series-connected lithium ion batteries that are connected in parallel with said DC power supply apparatus and said load device; a charging current limiting circuit that is connected in series with said plurality of lithium ion batteries and supplies a charging current of an arbitrary value independent of load fluctuations in the charging path of said plurality of lithium ion batteries; a switch that disconnects said plurality of lithium ion batteries from said DC power supply apparatus or said load device, or connects said plurality of lithium ion batteries to said DC power supply apparatus or said load device; a voltage regulation circuit that is connected in parallel with each lithium ion battery of said plurality of series-connected lithium ion batteries, detects a full-charge voltage in each lithium ion battery and bypasses said charging current; and a control circuit that monitors the voltage value and current value of said charging path, sets a reference voltage used for setting a charging current of an arbitrary value in said charging current limiting circuit and sets a full-charge reference voltage setting in said voltage regulation circuit, and switches said switch when said voltage of said charging path exceeds a specified voltage value during charging.

According to the present invention, the charging current limiting circuit that is connected in series with said lithium ion battery supplies a charging current of an arbitrary value independent of load fluctuations in the charging path of the lithium ion battery. Also, the present invention makes possible constant connection between a DC power supply apparatus or load device and a lithium ion battery, without switching or disconnecting the DC power supply apparatus or load device and a lithium ion battery themselves, by connecting or disconnecting the lithium ion battery to/from said DC power supply apparatus or said load device with a switch. Also, the present invention can limit the charging current for the lithium ion battery to an arbitrary current value, and perform recovery charging with an optimal charging current that is suited to the capacity of the installed lithium ion battery.

Also, with a voltage regulation circuit that is connected in parallel with each lithium ion battery of a plurality of lithium ion batteries connected in series, the present invention detects a full-charge voltage in each of the lithium ion batteries for bypassing said charging current, adjusts variations among the charge voltages for the lithium ion batteries during charging, can avoid overcharging and can avoid drops in capacity due to overcharging.

Moreover, the lithium ion batteries are always connected to the DC power supply apparatus or said load device, but the voltage regulation circuit operates to adjust the charge voltages of all the lithium ion batteries to a uniform charge voltage when variations occur among the charge voltages of the lithium ion batteries due to a change in the impedances within the lithium ion batteries when the lithium ion batteries are fully charged.

### BRIEF DESCRIPTION OF THE DRAWINGS

FIG. 1 is a block diagram showing one embodiment of the power supply system of the present invention.
FIG. 2 is a drawing showing one embodiment of the charging current limiting circuit shown in FIG. 1.
FIG 3 is a drawing showing one embodiment of the voltage regulation circuit shown in FIG. 1.
FIG. 4 is a graph showing the power supply state of a lithium ion battery during charging.
FIG. 5 is a graph showing the power supply state of a lithium ion battery that has a charging current limiting circuit.
FIG. 6 is a figure showing the state of voltage and current of a lithium ion battery at full charge during charging.
FIG. 7 is drawing showing the circuit embodiment of the charging current limiting circuit shown in FIG 2.
FIG. 8 is a drawing showing the circuit embodiment of the voltage regulation circuit shown in FIG. 3.
FIG. 9 is a block diagram showing another embodiment of the power supply system of the present invention.
FIG. 10 is a drawing showing an example of a conventional power supply system.

### BEST MODE FOR CARRYING OUT THE INVENTION

The preferred embodiments of the present invention shall be explained below with reference to the appended drawings. However, the present invention is not limited to the below embodiments, such that the constituent elements described in these embodiments may be suitably combined.

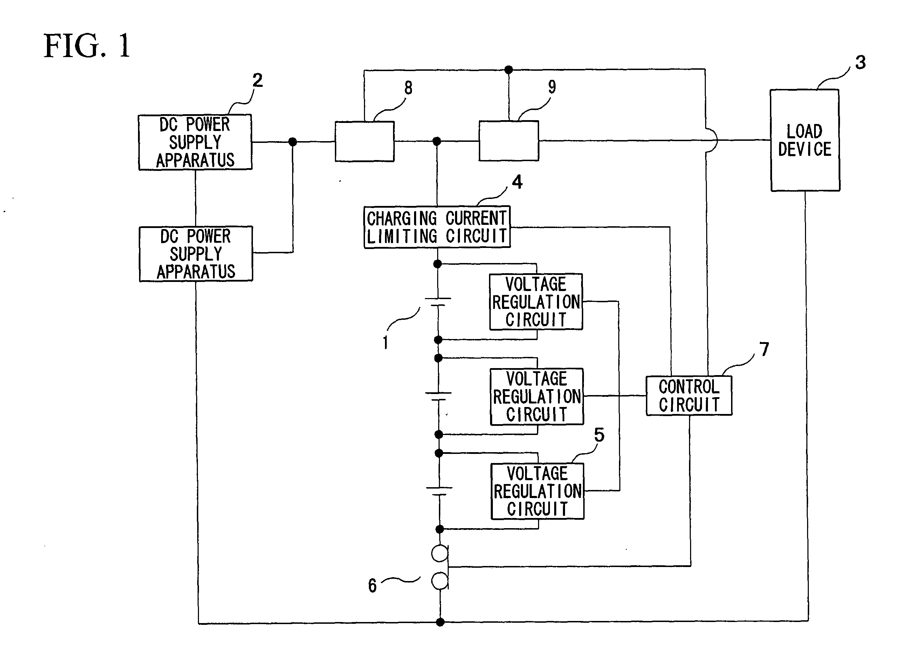

FIG. 1 is a block diagram showing one embodiment of the power supply system of the present invention. The power supply system of the present invention is constituted of a lithium ion battery 1 for backup that is connected in parallel with a DC power supply apparatus 2 and a load device 3, and furthermore a charging current limiting circuit 4, a voltage regulation circuit 5, a switch 6, and a control circuit 7. Here, the DC power supply apparatus 2 is provided in a plurality.

The charging current limiting circuit 4 is connected in series with the lithium ion battery 1, limiting the charging current in the charging path of the lithium ion battery 1 so as to charge the lithium ion battery 1 with a constant current independent of load fluctuations.

The switch 6 disconnects the lithium ion battery 1 from the DC power supply apparatus 2 or the load device 3, or else connects the lithium ion battery 1 to the DC power supply apparatus 2 or the load device 3. The voltage regulation circuit 5 is connected in parallel with each lithium ion battery of a plurality of the lithium ion batteries 1 connected in series, and has a function of detecting a full-charge voltage in each of the lithium ion batteries and bypassing the charging current around the lithium ion battery.

The control circuit 7 is constituted of a microcomputer, and has a function of monitoring the voltage value and current value of the charging path by means of a current measurement portion 8 and a voltage measurement portion 9, setting a reference voltage used for setting an arbitrary charging current value in the charging current limiting circuit 4 and a full-charge reference voltage in the voltage regulation circuit 5, and switching the switch 6 when the voltage of a charging path exceeds a specified voltage value during charging.

The switch 6, which is used to protect the lithium ion battery 1 from overcharging and over-discharging, is connected in series with the charging/discharging path of the lithium ion battery 1. The switch 6 is mainly used for circuit disconnection to protect the lithium ion battery 1, whereby the switch 6 becomes "open" when the cell voltage rises to a voltage that is the rated voltage of the battery. Also, the switch 6 can be used for protecting the lithium ion battery 1 from over-discharging, whereby when the voltage of an arbitrary lithium ion battery 1 falls to a specified value during discharging, the switch 6 becomes "open" to protect the lithium ion battery 1.

As the voltage value at which the switch 6 operates by overcharging, 4.5V is for example given, and as the voltage value of operation by over-discharging, 3.0V is for example given. These voltages will change depending on the type of lithium ion battery used, and so values may be set that are required by the lithium ion battery to be used.

The return of the switch 6 is performed manually in the case of overcharging, and automatically in the case of over-discharging.

The DC power supply apparatus 2 may be constituted with one unit, however, a redundant constitution is adopted here as a system for a communication device. Also, the reference voltage value of the voltage regulation circuit 5 and the limiting current value of the charging current limiting circuit 4 are set by the control circuit 7 that is constituted by a microcomputer. Moreover, the control circuit 7 has a function to measure the voltage and current at any location in the power supply system. For example, the current measurement portion 8 detects the current using a shunt resistor or the like, with the current measurement portion 8 being monitored by the control circuit 7.

Also, it is possible for the control circuit 7 to monitor the voltage of each cell. The control circuit 7 detects when the cell voltage has exceeded the safe operating range of the lithium ion battery 1 during charging and opens the switch 6 disposed in the charging/discharging path of the lithium ion battery 1. Thereby, it is possible to ensure the safety of the lithium ion battery 1.

The aforementioned constitution can switch the connection of the lithium ion battery 1 from the DC power supply apparatus 2 and the load device 3 or allow constant connection without performing disconnection. In addition, it can restrict the charging current of the lithium ion battery 1 to an arbitrarily determined current value, and perform recovery charging with an optimal charging current that is suited to the capacity of the installed lithium ion battery 1.

Also, when a plurality of the lithium ion batteries 1 connected in series are charged, due to variations in the charge states of the individual lithium ion batteries 1, some of the lithium ion batteries 1 will quickly reach a full-charge state. However, by operating the voltage regulation circuits 5 connected in parallel with the lithium ion batteries 1 to bypass the charging current, the variations among the individual charge voltages of the lithium ion batteries 1 during charging can be adjusted to avoid overcharging.

Furthermore, although the lithium ion batteries 1 are always connected to the DC power supply apparatus 2 and the load apparatus 3, when the lithium ion batteries 1 are fully charged, variations among the charge voltages of the lithium ion batteries 1 occur due to changes in the internal impedances of the lithium ion batteries 1. In this case, the operation of the voltage regulation circuits 5 can adjust the charge voltages of all the lithium ion batteries 1 to a uniform charge voltage.

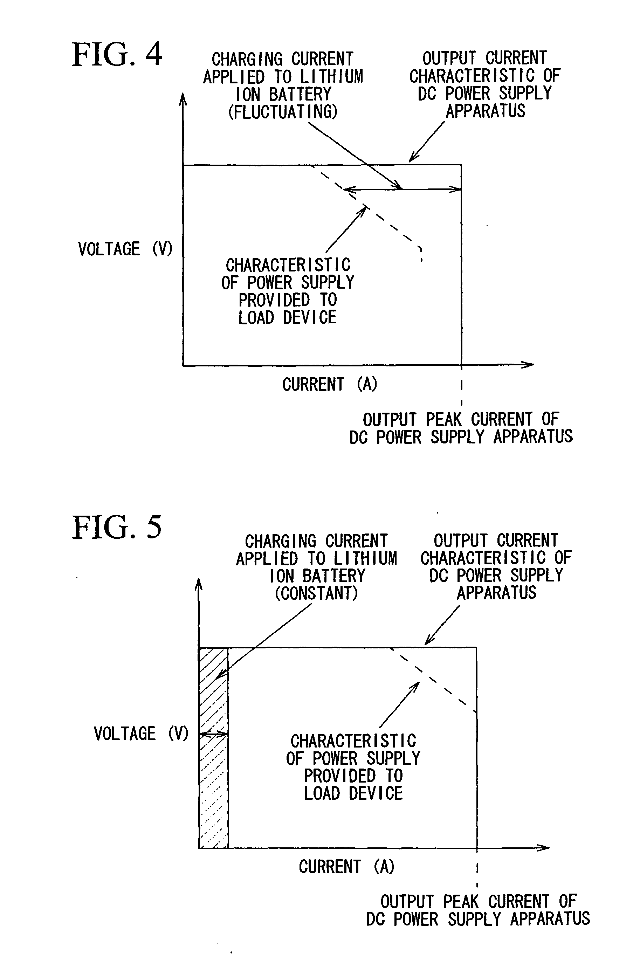

FIG 4 is a graph showing the power supply state of the power supply system during charging. As shown in FIG. 4, the DC power supply apparatus 2 supplies electric power to the load device 3 while charging the lithium ion battery 1. However, depending on the power supply state of the load device 3, the charging current to the lithium ion battery 1 will fluctuate.

As a method of charging the lithium ion battery 1, constant-current/constant-voltage charging is commonly used. In this method, current greater than the allowed current value flows to the lithium ion battery 1, and the charging by the current fluctuates over time, thereby leading to a drop in performance of the lithium ion battery 1. Also, when the power supplied to the load device 3 is minute, the output peak current of the DC power supply apparatus 2 becomes the charging current of the lithium ion battery 1. As a result, the lithium ion battery 1 ends up being charged with an excessive charging current, thereby causing a drop in performance of the lithium ion battery 1.

For this reason, in the present invention the charging current limiting circuit 4 is connected to the charging path of the lithium ion battery 1 and set to an arbitrary charging current value. Thereby, even when the power supply state of the load device 3 fluctuates, the lithium ion battery 1 can be charged with a constant charging current value. FIG. 5 is a graph showing the power supply state during charging of a power supply system that has a charging current limiting circuit.

As shown in FIG. 5, even when the power supplied to the load device 3 is minute, the charging current does not flow above the arbitrary current value set in the charging current limiting circuit 4. The charging current value of the charging current limiting circuit 4 can be arbitrarily set by the state or capacity of the lithium ion battery 1. High-current discharge is possible during discharging of the lithium ion battery 1, with discharge by a current that is 5 to 6 times the normal capacity also possible (in the case of a battery rating of 50Ah, this works out to 250A to 300A). However, during charging, a current value of one to one-tenth of the normal capacity is the maximum allowed value (in the case of a battery rating of 50Ah, this is 5A to 50A). The charging current value of the charging current limiting circuit 4 is thus set based on the capacity of the lithium ion battery 1.

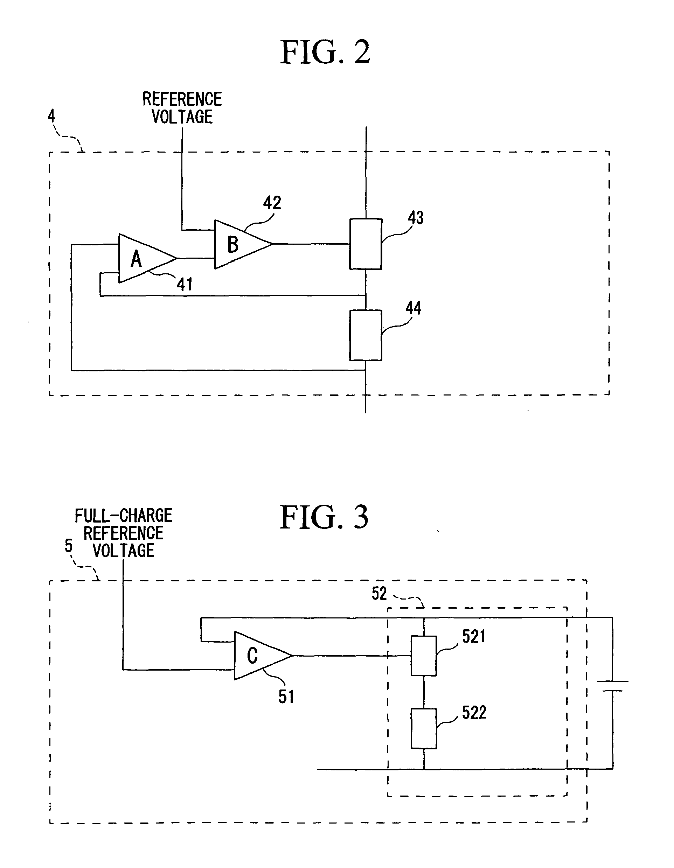

FIG. 2 shows one embodiment of the charging current limiting circuit 4 shown in FIG. 1. The charging current limiting circuit 4 is constituted of an error amplifier A 41; an error amplifier B 42 which has as inputs the output of the error amplifier A 41 and the reference voltage for setting the arbitrary charging current; a charging current control element 43 such as a transistor or the like; and a charging current detecting element 44 such as, for example, a resistor or the like.

In the aforementioned constitution, the charging current is detected by the charging current detecting element 44, and that value is amplified to a specified value by the error amplifier A 41. The amplified value is then input to the error amplifier B 42 so as to be the reference of the current value set arbitrarily. Then by controlling the charging current control element 43 with that output, it becomes a constant current value.

As a matter of course, when the charging current becomes lower than the current value that is arbitrarily set as the lithium ion battery 1 approaches the full-charge state, the charging current control element 43 no longer limits the current. Also, the current that is required for the load device 3 is discharged from the lithium ion battery 1 during discharge, but at that time the charging current limiting circuit 4 does not restrict the discharge current. During discharge, for example, a diode or the like that bypasses the charging current limiting circuit 4 shown in FIG. 2 may be connected.

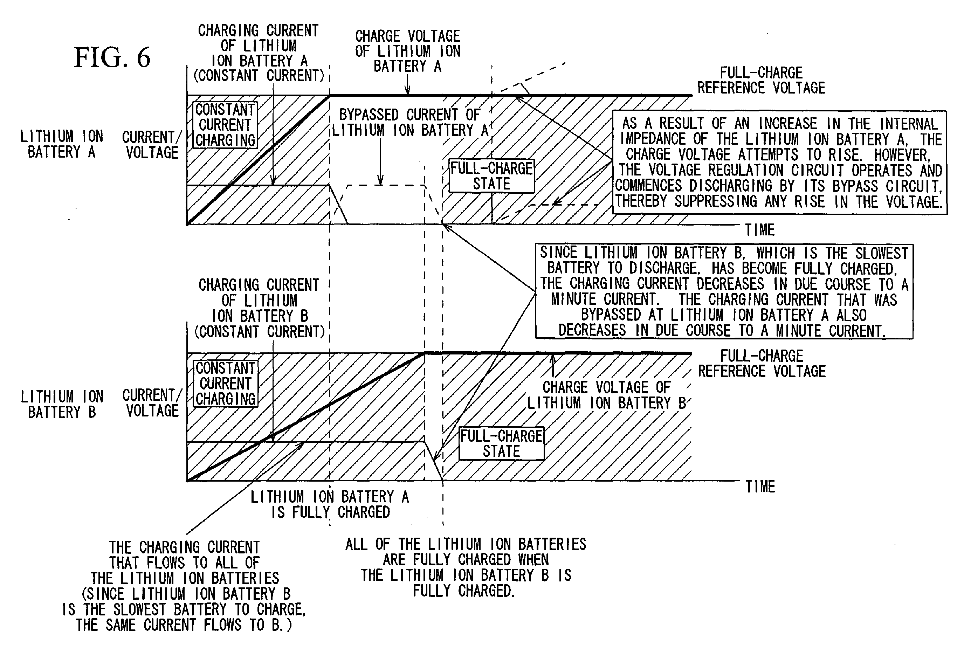

The lithium ion battery 1 is charged while the charging current limiting circuit 4 limits the charging current. However, during the charging process, variations among the individual charge states of the lithium ion batteries 1 are expected. In this example, FIG. 6 shows the current-voltage state of the lithium ion battery 1 during charging and when fully charged. For the sake of simplicity, this graph shows the case of using two (A and B) lithium ion batteries 1. Below, this graph and the constitution of the voltage regulation circuit 5 shown in FIG. 3 are explained in detail.

FIG 3 shows one embodiment of the voltage regulation circuit. The voltage regulation circuit 5 is constituted by an error amplifier C 51 and a charging current bypass circuit 52 in which a bypass current control element 521 and a bypass current limiting element 522 are connected in series.

In FIG. 6, the voltage regulation circuit 5 connected in parallel with each lithium ion battery 1 (A and B) detects the charge voltage. When, for example, the lithium ion battery A reaches the full-charge state quickly, the charging current of the lithium ion battery A that is fully charged is bypassed around the lithium ion battery A by the charging current bypass circuit 52 in the voltage regulation circuit 5, thereby averting overcharging.

The charging current bypass circuit 52 is constituted by the bypass current limiting element 522, such as a resistor or the like, that determines the maximum value of the bypassed current, and the bypass current control element 521, such as a transistor, that controls the current value of the bypassed current. Here, if the transistor is completely ON, the maximum value of the current determined by the bypass current limiting element 522 flows. When it is completely OFF, no bypassed current flows.

Furthermore, by using the transistor in its amplifying region (unsaturation region), the transistor acts as a variable resistor. In this case, the value of the bypassed current can be continuously varied. Although the charging current becomes a minute current when the lithium ion battery 1 approaches a fully charged state, continuously operating the bypass current control element 521 means being able to bypass even this minute current.

The amount of the bypassed current is controlled by the voltage regulation circuit 5. That is, by inputting the full-charge reference voltage and the detected value of the charge voltage in each lithium ion battery 1 into the error amplifier C 51, the bypass current control element 521 of the charging current bypass circuit 52 is controlled. Thus, only the required amount of the charging current is continuously bypassed by the charging current bypass circuit 52 so that the voltage of each lithium ion battery 1 does not exceed the full-charge voltage.

Thus, even when variations arise in the charge voltages of the plurality of lithium ion batteries 1, the charging current set in the charging current limiting circuit 4 continues to flow until all the lithium ion batteries reach full charge. For the lithium ion battery A that soon reaches its full charge, the voltage regulation circuit 5 operates to bypass the charging current by means of the charging current bypass circuit 52 until all the lithium ion batteries 1 become fully charged.

Even when all the lithium ion batteries have reached full charge, the lithium ion batteries 1 are connected to the DC power supply apparatus 2 and the load device 3. Therefore, although there is no charging or discharging of the lithium ion batteries 1 in this state, by being connected to the DC power supply apparatus 2 their full-charge state is maintained. Since the voltage regulation circuit 5 is also connected without being separated from the lithium ion batteries 1, all the lithium ion batteries 1 are maintained by a uniform charge voltage.

When variations occur among the internal impedances of the lithium ion batteries 1 for whatever reason in the state of the lithium ion batteries 1 being maintained by a uniform charge voltage, the charge voltage may become non-uniform. In this case as well, the charge voltages are kept uniform by the operation of the voltage regulation circuit 5.

In FIG 6, the internal impedance of the lithium ion battery A becomes higher due to fluctuation while the lithium ion battery A is in a full-charge state, leading to a rise in the charge voltage. As a result, the voltage regulation circuit 5, which takes the full-charge voltage as a reference, works to operate the charging current bypass circuit 52, with the increased portion of the charge voltage discharging by the bypassed current. Therefore, the lithium ion battery A whose charge voltage attempts to rise is held at the full-charge voltage. The charge voltages across the individual lithium ion batteries 1 can therefore maintain a uniform state. Since the lithium ion batteries 1 are always receiving a uniform charge voltage, even when supplying power to the load device 3, the performance of the lithium ion batteries 1 can be utilized to the maximum extent.

### (Embodiment 1)

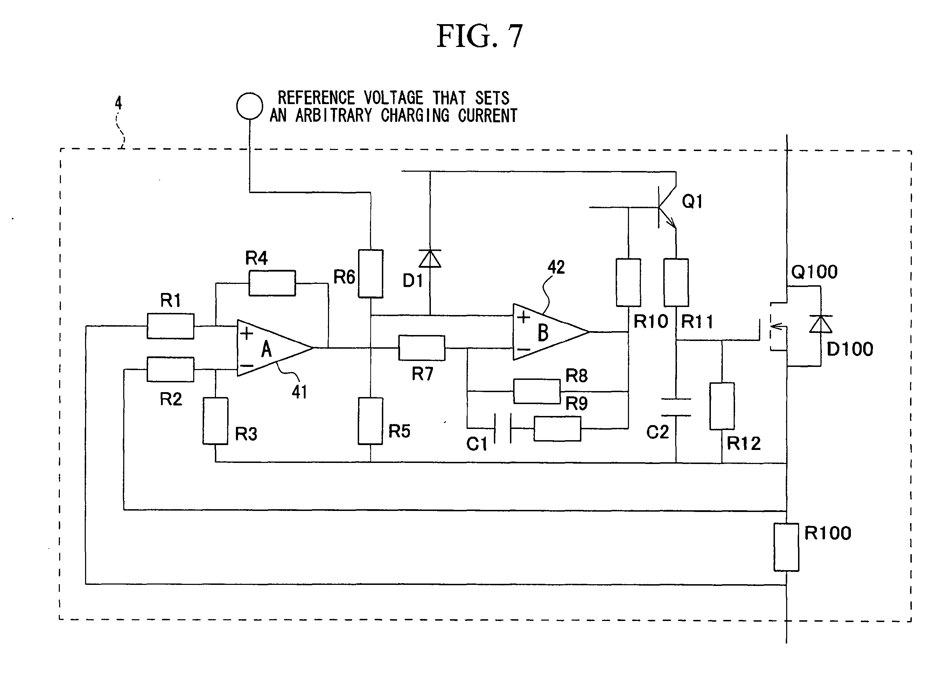

FIG. 7 shows the embodiment of the charging current limiting circuit 4. A resistor R100 is used for the charging current detecting element 44, and an FET Q100 is used for the charging current control element 43. A plurality of the FETs Q100 are used in parallel connection in accordance with the loss. Also, during discharge the FET Q100 forms a discharge path by being turned completely ON, or the FET Q100 forms a discharging path by being turned OFF and using the parasitic diode D100 of the FET Q100.

Specifically, the charging current detected by the resistor R100 is input to the differential amplifier constituted by resistors R1 to R4 and the error amplifier A 41, where it is amplified to a value determined in advance. The output thereof is then input to the inverted input terminal of the error amplifier B 42 through a resistor R7. The reference voltage that sets the charging current is divided by the resistors R5 and R6 from the control circuit 7 and input to the non-inverted input of the error amplifier B 42. Resistors R8 and R9 and a condenser C1 are connected to the error amplifier B 42 for the purpose of stabilizing the control of the charging current. The output of the error amplifier B 42 is input to the base of the transistor Q1 via a resistor R10. In addition, the transistor Q1 provides a signal to the gate of the charging current control element Q100 to control the charging current by the FET Q100. A resistor R12 and a condenser C2 are connected between the gate and the source of the FET Q100 for the purpose of stable operation of the FET Q100. Also, a diode D1 is a diode for input protection of the error amplifier B 42.

### (Embodiment 2)

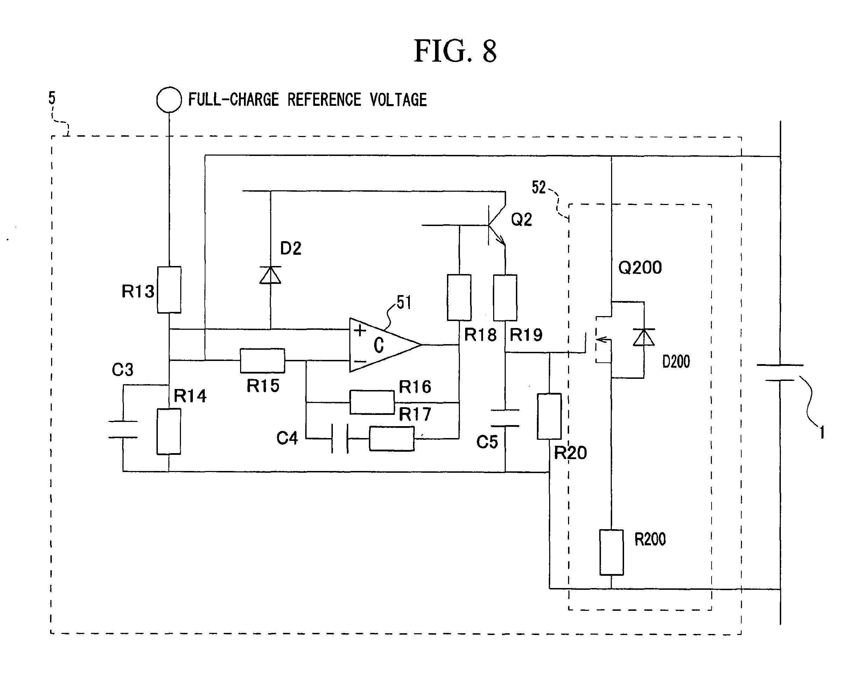

FIG. 8 shows the embodiment of the voltage regulation circuit 5. In the charging current bypass circuit 52 of the voltage regulation circuit 5, a resistor R200 is used for the bypass current limiting element 522, and an FET Q200 is used for the bypass current control element 521.

Here, the voltage of the lithium ion battery 1 is detected and input to the inverted input of the error amplifier C 51 via a resistor R15, and the reference voltage from the control circuit 7 is input to the non-inverted input terminal of the error amplifier C 51 via resistors R13 and R14 and a condenser C3. Here, the error amplifier C 51 outputs an output signal so that the two inputs become the same value. The output signal is input to the base of a transistor Q2 via a resistor R18.

The transistor Q2 provides a signal to the gate of the bypass current control element Q200 via a resistor R19 to control the bypassed current, performing control so that the voltage of the lithium ion battery becomes the same as the reference voltage. Also, resistors R16 and R17 and a condenser C4 are connected to the error amplifier C 51 to stabilize the control. A diode D2 is used for input protection of the error amplifier C 51. Also, a resistor R20 and a condenser C5 connect between the gate and the source of the FET Q200 for stable operation of the FET Q200.

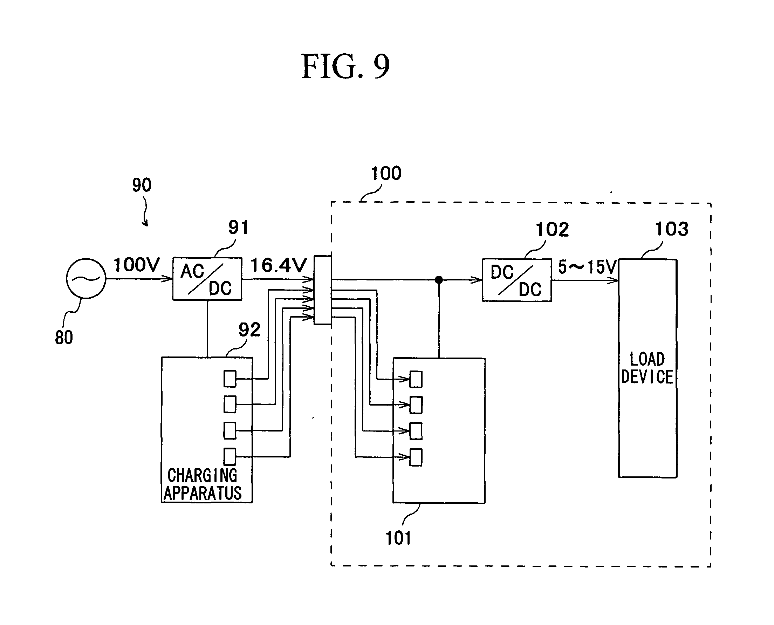

The above explanation covered the case of applying the power supply system of the present invention assuming the load device 3 to be a communication device, but the power supply of the present invention can be similarly applied even in the case of the load device 3 being a notebook personal computer. FIG. 9 shows such a constitution.

As shown in FIG 9, an AC adaptor 90 receives the feed of a commercial 100V power supply from outside and converts it to 16.4V DC via an AC/DC converter. A DC/DC converter 102 then produces a voltage (5V to 15V) suitable for the load device 103 such as the CPU inside a personal computer 100, and supplies it to the load device 103.

Meanwhile, a charging device 92 is provided in the AC adaptor 90, instead of a PC body 100, to avoid increasing the weight of the PC body 100. A lithium ion battery 101 in the PC body 100 here consists of four cylindrical lithium ion batteries 101 such as size AA batteries (4.1V × 4) connected in series, which receive charging from the charging device 92 and supply electrical power to the load device 103. Also, the aforementioned voltage regulation circuit (not shown) is connected to each of the lithium ion batteries 101 in parallel. Therefore, even if the lithium ion batteries 101 undergo repeated charging, no overcharging occurs, thereby preventing a reduction in capacity of the lithium ion batteries 101. As a result, a reduction in the running time of the personal computer due to continuous use can be avoided.

As explained above, according to the present invention, the charging current limiting circuit 4 connected in series with the lithium ion battery 1 (101) supplies a charging current of an arbitrary value to the charging path of the lithium ion batteries so that they are charged by a constant current independent of load fluctuations. Also, by disconnecting the lithium ion batteries 1 from the DC power supply apparatus 2 or the load device 3 by using the switch 6, or connecting the lithium ion batteries 1 to the DC power supply apparatus 2 or the load device 3, the connection of the DC power supply apparatus 2 and the load device 3 with the lithium ion batteries 1 (101) can be always performed. Moreover, the charging current of the lithium ion batteries 1 (101) can be restricted to an arbitrary current, and recovery charging can be performed with an optimal charging current that is suited to the capacity of the lithium ion batteries 1 (101).

Also, according to the present invention, the voltage regulation circuit 5 is connected in parallel with each lithium ion battery 1 of the plurality of lithium ion batteries 1 (101) connected in series. Thereby, variations in the charge voltages of each lithium ion battery 1 in the lithium ion battery 1 during charging can be adjusted to avoid overcharging by detecting the full-charge voltage of each lithium ion battery 1 and bypassing the charging current. Furthermore, the lithium ion batteries 1 (101) are always connected to the DC power supply apparatus 2 and the load device 3, however, during full charge of the lithium ion battery 1 (101), variations among the charge voltages of the lithium ion batteries 1 (101) may occur due to changes in the internal impedances of the lithium ion battery 1 (101). In this case, the operation of the voltage regulation circuit 5 can adjust the charge voltages of all the lithium ion batteries 1 (101) to a uniform charge voltage.

## Claims

1. A power supply system comprising:
a DC power supply apparatus;
a load device;
a lithium ion battery for backup that is connected in parallel with said DC power supply apparatus and said load device;
a charging path;
a charging current limiting circuit that is connected in series with said lithium ion battery and supplies a charging current of an arbitrary value independent of load fluctuations in the charging path of the lithium ion battery;
a switch that disconnects said lithium ion battery from said DC power supply apparatus or said load device, or connects said lithium ion battery to said DC power supply apparatus or said load device; and
a control circuit that monitors the voltage value of said charging path, sets a reference voltage setting used for setting the charging current of an arbitrary value in said charging current limiting circuit, and controls said switch when said voltage of said charging path exceeds a specified voltage value during charging.

2. The power supply system in accordance with claim 1, wherein a plurality of said lithium ion batters are connected in series, and
said power supply system is further provided with a voltage regulation circuit that is connected in parallel with each lithium ion battery of said plurality of series-connected lithium ion batteries, detects a full-charge voltage in each of said lithium ion batteries and bypasses said charging current.

3. A power supply system comprising:
a DC power supply apparatus;
a load device;
a plurality of series-connected lithium ion batteries that are connected in parallel with said DC power supply apparatus and said load device;
a charging current limiting circuit that is connected in series with said plurality of lithium ion batteries and that supplies a charging current of an arbitrary value independent of load fluctuations in the charging path of said plurality of lithium ion batteries;
a switch that disconnects said plurality of lithium ion batteries from said DC power supply apparatus or said load device, or connects said plurality of lithium ion batteries to said DC power supply apparatus or said load device;
a voltage regulation circuit that is connected in parallel with each lithium ion battery of said plurality of series-connected lithium ion batteries, detects a full-charge voltage in each lithium ion battery and bypasses said charging current; and
a control circuit that monitors the voltage value and current value of said charging path, sets a reference voltage used for setting the charging current of an arbitrary value in said charging current limiting circuit and sets a full-charge reference voltage setting in said voltage regulation circuit, and switches said switch when said voltage of said charging path exceeds a specified voltage value during charging.
